Europäisches Patentamt

European Patent Office

Office européen des brevets

(11) Veröffentlichungsnummer: **0 367 920 A2**

(12) **EUROPÄISCHE PATENTANMELDUNG**

(21) Anmeldenummer: **89115222.5**

(22) Anmeldetag: **18.08.89**

(51) Int. Cl.5: **B21D 28/12, B21D 37/06**

(30) Priorität: **08.11.88 DE 3838198**

(43) Veröffentlichungstag der Anmeldung:
**16.05.90 Patentblatt 90/20**

(84) Benannte Vertragsstaaten:
**AT BE CH DE ES FR GB GR IT LI NL SE**

(71) Anmelder: **MUHR UND BENDER MASCHINENBAU GMBH**
**Kölner Strasse 99**
**D-5952 Attendorn(DE)**

(72) Erfinder: **Schulte, Karl-Heinz**
**Am Wasserfall 1**
**D-5940 Lennestadt(DE)**

(74) Vertreter: **Gesthuysen, Hans Dieter, Dipl.-Ing. et al**
**Patentanwälte Gesthuysen + von Rohr**
**Huyssenallee 15 Postfach 10 13 33**
**D-4300 Essen 1(DE)**

(54) **Werkzeugmaschine.**

(57) Bei einer Werkzeugmaschine mit einem an drei Seiten offenen, vorzugsweise etwa C-förmigen Maschinenrahmen, einem am Maschinenrahmen angebrachten, durch einen Antriebsschlitten vertikal bewegbaren, oberen Werkzeugträger (3) mit mindestens zwei nebeneinander angeordneten Werkzeugaufnahmen (4) mit entsprechende Oberwerkzeugen (5), einem am Maschinenrahmen angebrachten unteren Werkzeugträger (6) mit einer entsprechenden Anzahl von nebeneinander angeordneten Werkzeugaufnahmen (7) mit entsprechenden Unterwerkzeugen (8) und einer auf dem unteren Werkzeugträger (6) aufgespannten, vorzugsweise in einer Fassung angeordneten, die Werkzeugaufnahmen (7) aufweisenden Matrizenplatte (9), kann eine selbstgeführte Werkzeugeinheit in gleich flexibler Weise wie die normalen Ober- und Unterwerkzeuge verwendet werden, indem auf der Matrizenplatte (9) anstatt eines Unterwerkzeuges in einer entsprechenden Werkzeugaufnahme (7) eine ein Oberwerkzeug (10) und ein Unterwerkzeug (11) in einem Führungsrahmen (12) umfassende Werkzeugeinheit (13), insbesondere Schneideinheit oder Ausklinkeinheit, angeordnet und mit dem oberen Werkzeugträger (3) antriebsmäßig gekuppelt ist.

Fig. 2

## Werkzeugmaschine

Die Erfindung betrifft eine Werkzeugmaschine mit einem an drei Seiten offenen, vorzugsweise etwa C-förmigen Maschinenrahmen, einem am Maschinenrahmen angebrachten, durch einen Antriebsschlitten vertikal bewegbaren, oberen Werkzeugträger mit mindestens zwei nebeneinander angeordneten Werkzeugaufnahmen mit entsprechenden Oberwerkzeugen, einem am Maschinenrahmen angebrachten unteren Werkzeugträger mit einer entsprechenden Anzahl von nebeneinander angeordneten Werkzeugaufnahmen mit entsprechenden Unterwerkzeugen und einer auf dem unteren Werkzeugträger aufgespannten, vorzugsweise in einer Fassung angeordneten, die Werkzeugaufnahmen aufweisenden Matrizenplatte.

Die bekannte Werkzeugmaschine, von der die Erfindung ausgeht (EP-A 0 180 146), ist eine Mehrstempel-Werkzeugmaschine mit mindestens drei, häufig auch mit fünf im oberen Werkzeugträger nebeneinander angeordneten Werkzeugaufnahmen mit darin angeordneten Oberwerkzeugen, insbesondere Stanzstempeln, und einer entsprechenden Anzahl von unteren Werkzeugaufnahmen mit entsprechenden Unterwerkzeugen, insbesondere Stanzmatrizen. Die Oberwerkzeuge sind einzeln oder sämtlich besonders schnell dadurch wechselbar, daß eine alle Werkzeugaufnahmen am oberen Werkzeugträger an den Stirnseiten verschließende Verschlußkappe am oberen Werkzeugträger schwenkbar angelenkt und mit diesem verriegelbar ist. Bei geöffneter Verschlußkappe kann ein einzelnes Oberwerkzeug oder können sämtliche Oberwerkzeuge einfach horizontal aus den horizontal an einer Seite geöffneten Werkzeugaufnahmen herausgezogen bzw. entsprechend andere Oberwerkzeuge horizontal eingeschoben werden.

Die Werkzeugaufnahmen am unteren Werkzeugträger befinden sich in einer Matrizenplatte, die ihrerseits in einer Fassung einer Sattelplatte eingesetzt ist. Durch Einschieben der Matrizenplatte in die Fassung der Sattelplatte und verriegelndes Verspannen in dieser Fassung ist die Matrizenplatte hier mit wenigen Griffen immer in ihre Sollposition bringbar. Es hängt von der Anzahl und der Größe der Oberwerkzeuge und Unterwerkzeuge ab, wieviele Oberwerkzeuge und Unterwerkzeuge hier gleichzeitig verwendet werden können. Entsprechend der Anzahl und Größe der Unterwerkzeuge gibt es verschiedene gegeneinander auswechselbare Matrizenplatten.

Für sich ist es für Werkzeugmaschinen mit einem Oberwerkzeug und einem Unterwerkzeug bekannt, das Oberwerkzeug und das Unterwerkzeug in einer einen Führungsrahmen umfassenden Werkzeugeinheit, insbesondere einer Schneideinheit oder Ausklinkeinheit, zusammenzufassen (DE-AS 10 04 891). Diese bekannte Werkzeugmaschine weist als Werkzeugeinheit eine Ausklinkeinheit auf. Das Oberwerkzeug ist in einem Führungsrahmen in Führungsschienen vertikal verschiebbar geführt und weist am oberen Ende ein hammerkopfartiges Kupplungsmittel auf, das in ein korrespondierendes, hier als T-Nut ausgeführtes Kupplungsmittel am oberen Werkzeugträger einführbar ist. Der Führungsrahmen der Werkzeugeinheit, der das Unterwerkzeug aufnimmt, hat am unteren Ende eine umgekehrt T-förmige Platte als Kupplungsmittel, die in ein als T-Nut ausgeführtes Kupplungsmittel am unteren Werkzeugträger eingeschoben werden kann. Die gesamte Werkzeugeinheit wird bei dieser bekannten Werkzeugmaschine also insgesamt in Längsrichtung des Maschinenrahmens, von der offenen Stirnseite her kuppelnd zwischen den oberen und den unteren Werkzeugträger eingeschoben. Dies ist besonders zweckmäßig, da die Werkzeugeinheit schnell und einfach ausgetauscht werden kann, wobei gleichzeitig wegen der Selbstführung der Werkzeuge in der Werkzeugeinheit insbesondere beim Schneiden bzw. beim Ausklinken auftretende Querkräfte innerhalb der Werkzeugeinheit kompensiert bzw. abgefangen werden können.

Der Erfindung liegt nun die Aufgabe zugrunde, die eingangs erläuterte, bekannte Werkzeugmaschine so auszugestalten und weiterzubilden, daß auch hier eine selbstgeführte Werkzeugeinheit in gleich flexibler Weise wie die normalen Ober- und Unterwerkzeuge verwendet werden kann.

Die zuvor aufgezeigte Aufgabe ist dadurch gelöst, daß auf der Matrizenplatte anstatt eines Unterwerkzeuges in einer entsprechenden Werkzeugaufnahme eine ein Oberwerkzeug und ein Unterwerkzeug in einem Führungsrahmen umfassende Werkzeugeinheit, insbesondere Schneideinheit oder Ausklinkeinheit, angeordnet und mit dem oberen Werkzeugträger antriebsmäßig gekuppelt ist. Erfindungsgemäß ist erkannt worden, daß auch eine selbstgeführte Werkzeugeinheit in die Mehrstempel-Werkzeugmaschine, von der die Erfindung ausgeht, integriert werden kann, wenn man die Werkzeugeinheit wie ein Unterwerkzeug behandelt, jedoch das Oberwerkzeug in der Werkzeugeinheit antriebsmäßig mit dem oberen Werkzeugträger kuppelt. Dann kann man sogar das Schnellwechselsystem der bekannten Werkzeugmaschine mit der Verschlußkappe beibehalten.

Es gibt nun verschiedene Möglichkeiten, die zuvor erläuterte Lehre der Erfindung auszugestalten und weiterzubilden. Dazu wird einerseits auf die dem Anspruch 1 nachgeordneten Ansprüche verwiesen. Andererseits wird dazu auf die nachfolgende Erläuterung eines bevorzugten Ausführungsbeispiels anhand der Zeichnung verwiesen.

In der Zeichnung zeigt

Fig. 1 in einer Seitenansicht, schematisch, ausschnittweise eine Werkzeugmaschine gemäß der Erfindung,

Fig. 2 die Werkzeugmaschine aus Fig. 1 in einer Ansicht von der Stirnseite des Maschinenrahmens her und

Fig. 3 vergrößert, teilweise geschnitten, eine besonders bevorzugte Werkzeugeinheit für eine Werkzeugmaschine gemäß Fig. 1.

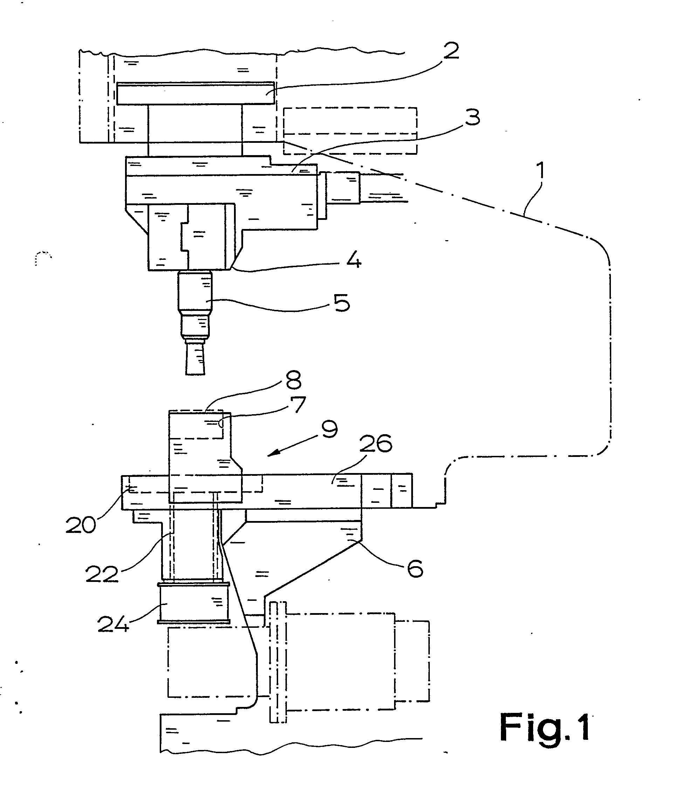

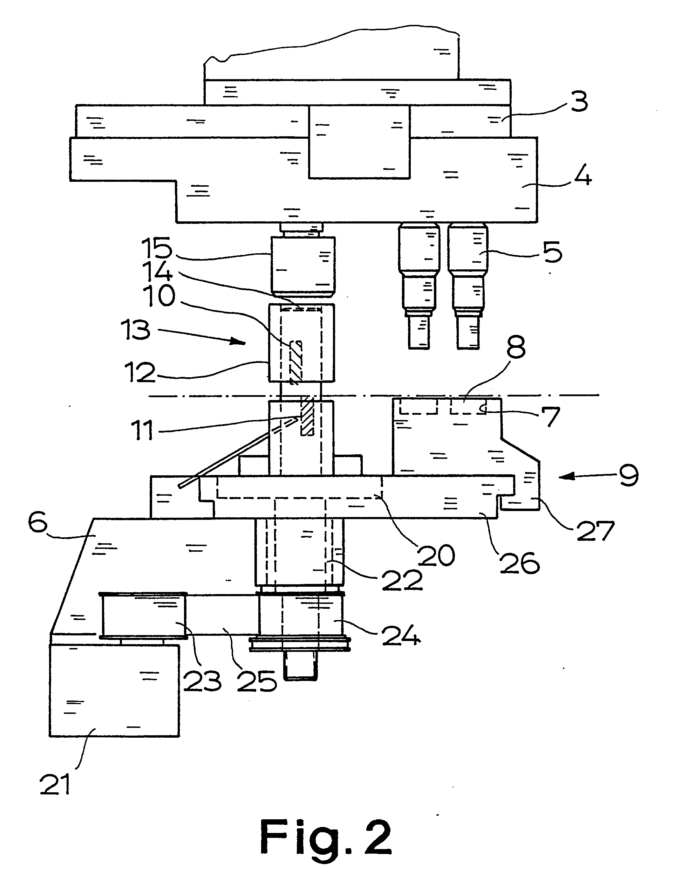

Die in Fig. 1 in einer Seitenansicht dargestellte Werkzeugmaschine weist zunächst einen an drei Seiten offenen, vorzugsweise etwa C-förmigen Maschinenrahmen 1 auf. Am Maschinenrahmen 1 ist ein durch einen schematisch dargestellten Antriebschlitten 2 vertikal bewegbarer oberer Werkzeugträger 3 angebracht. Der obere Werkzeugträger 3 weist, wie insbesondere Fig. 2 zeigt, mehrere nebeneinander angeordnete Werkzeugaufnahmen 4 mit darin entsprechend angeordneten Oberwerkzeugen 5 auf. Als Oberwerkzeuge 5 sind hier zunächst zwei Stanzstempel erkennbar. Ferner am Maschinenrahmen 1 angebracht ist ein unterer Werkzeugträger 6 mit einer entsprechenden Anzahl von nebeneinander angeordneten Werkzeugaufnahmen 7 mit entsprechenden Unterwerkzeugen 8. Hier dargestellt sind zunächst zwei den als Stanzstempel ausgeführten Oberwerkzeugen 5 entsprechende Stanzmatrizen als Unterwerkzeuge 8.

Auf dem unteren Werkzeugträger 6 aufgespannt und vorzugsweise in einer Fassung angeordnet ist eine die Werkzeugaufnahmen 7 aufweisende Matrizenplatte 9. Die Matrizenplatte 9 kann ausgewechselt werden, um entsprechend ausgewechselten Oberwerkzeugen 5 passende Unterwerkzeuge 8 gegenüberzustellen.

Von erfindungswesentlicher Bedeutung ist nun zunächst, daß auf der Matrizenplatte 9 anstatt eines Unterwerkzeugs in einer entsprechenden Werkzeugaufnahme 7 eine ein Oberwerkzeug 10 und ein Unterwerkzeug 11 in einem Führungsrahmen 12 umfassende Werkzeugeinheit 13, insbesondere Schneideinheit oder Ausklinkeinheit, angeordnet und mit dem oberen Werkzeugträger 3 antriebsmäßig gekuppelt ist. Im dargestellten und insoweit bevorzugten Ausführungsbeispiel ist der obere Werkzeugträger 3 grundsätzlich für die Aufnahme von fünf Oberwerkzeugen 5 normaler Größe, also von fünf Stanzstempeln vorbereitet, weist also insgesamt fünf Werkzeugaufnahmen 4 auf. Entsprechend weist der untere Werkzeugträger 6 im Prinzip den Platz für fünf entsprechende Werkzeugaufnahmen 7 auf. Im dargestellten Ausführungsbeispiel ist nun erkennbar, daß die Werkzeugeinheit 13 den Platz mehrerer normaler Unterwerkzeuge, hier nämlich dreier Unterwerkzeuge einnimmt. Die Werkzeugeinheit 13 ist dabei so angeordnet, daß sie außermittig auf der Matrizenplatte 9 positioniert ist.

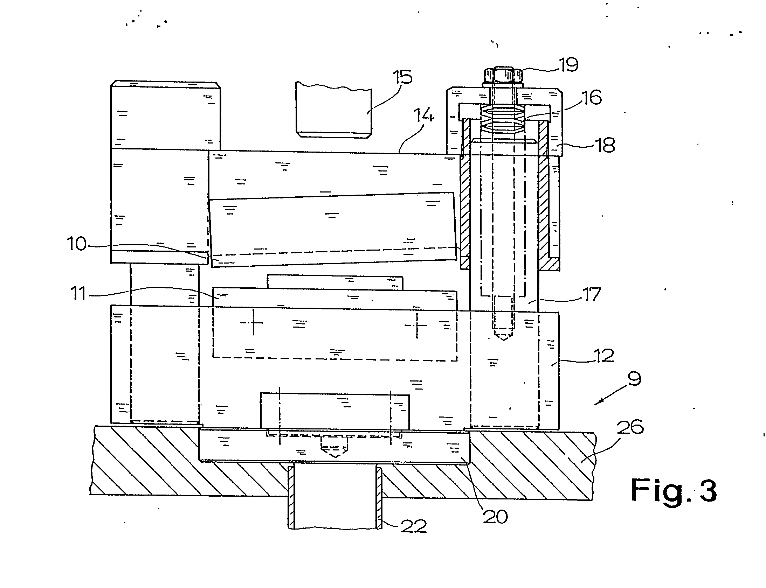

Die Werkzeugeinheit 13 muß insgesamt kraftschlüssig kuppelnd zwischen den oberen und den unteren Werkzeugträger 3, 6 eingesetzt sein. Die kraft schlüssige Kupplung zum oberen Werkzeugträger 3 könnte systemgemäß zunächst dadurch realisiert werden, daß die Werkzeugeinheit ein mit dem Oberwerkzeug verbundenes Kupplungsteil aufweist und das Kupplungsteil anstelle eines Oberwerkzeugs in eine entsprechende Werkzeugaufnahme im oberen Werkzeugträger eingesetzt ist. Bei entsprechend geschickter Ausgestaltung der Werkzeugeinheit 13 läßt sich aber eine noch einfachere Lösung realisieren, die dadurch gekennzeichnet ist, daß das Oberwerkzeug 10 der Werkzeugeinheit 13 eine zum oberen Werkzeugträger 3 hin weisende Kraftübertragungsfläche 14 aufweist und daß in der entsprechenden Werkzeugaufnahme 4 im oberen Werkzeugträger 3 ein auf der Kraftübertragungsfläche 14 aufsitzender Druckstößel 15 angeordnet ist. Der Druckstößel 15 ist in Fig. 2 ganz besonders gut erkennbar. Fig. 3 zeigt, wie der Druckstößel 15 lediglich auf der Kraftübertragungsfläche 14 aufsitzt.

Die Werkzeugeinheit 13 ist im Stand der Technik so ausgeführt, daß deren Unterwerkzeug 11 feststeht, während das Oberwerkzeug 10 vom oberen Werkzeugträger 3 aktiv nach oben oder nach unten bewegt werden kann. Noch zweckmäßiger ist allerdings eine Gestaltung der Werkzeugeinheit 13, die dadurch gekennzeichnet ist, daß das Oberwerkzeug 10 in die vom Unterwerkzeug 11 abgehobene, geöffnete Stellung vorgespannt und entgegen der Vorspannkraft in die auf das Unterwerkzeug 11 abgesenkte, geschlossene Stellung herunterdrückbar ist. Diese Vorspannung des Oberwerkzeugs 10 der Werkzeugeinheit 13 in die geöffnete Stellung korrespondiert in besonders zweckmäßiger Weise zu der Verwendung eines Druckstößels 15.

Die Vorspannung des Oberwerkzeugs 10 kann durch verschiedene Mittel erzeugt werden. Insbesondere empfehlen sich als Vorspannmittel Federn 16, also Zugfeder, Druckfedern, Schraubendruckfedern, Gasdruckfedern usw. Im dargestellten Ausführungsbeispiel wird die Vorspannung des Oberwerkzeugs 10 durch zwei Tellerfederstapel erzeugt (Fig. 3). Fig. 3 zeigt in dem Zusammenhang, daß nach bevorzugter Lehre der Erfindung der Führungsrahmen 12 der Werkzeugein heit 13 als Säulenführung ausgeführt ist. Dabei sind hier die Federn 16, insbesondere also die Tellerfedern der Tellerfederstapel, in entsprechenden Führungssäulen 17 angeordnet. Man erkennt in Fig. 3 gut, daß das Oberwerkzeug 10, hier also das Obermesser, mit einseitig geschlossenen Führungszylindern 18 auf die Führungssäulen 17 aufgesetzt ist, wobei die als Tellerfederstapel ausgeführten Federn 16 im Inneren der Führungssäulen 17 angeordnet sind. Eine die als Tellerfederstapel ausgeführten Federn 16 jeweils mittig durchsetzende Halteschraube 19 begrenzt die Bewegung des Oberwerkzeugs 10 nach oben hin.

Die eingangs erläuterte, bekannte Werkzeugmaschine mit einer Werkzeugeinheit ist insoweit noch nicht flexibel genug, als beispielsweise eine Folge von Gehrungsschnitten mit unterschiedlichen Gehrungswinkeln zwischen jeweils zwei Schnitten ein Auswechseln der Werkzeugeinheit gegen eine andere, den folgenden Gehrungswinkel aufweisende Werkzeugeinheit erforderlich machen würde. Insoweit empfiehlt sich auch bei der Lehre der Erfindung eine weitere Verbesserung der Flexibilität dadurch, daß die Werkzeugaufnahme 7 für die Werkzeugeinheit 13 drehsymmetrisch, insbesondere als Drehfassung, ausgebildet ist und die Werkzeugeinheit 13 auf einem in der Werkzeugaufnahme 7 in horizontaler Ebene drehbaren Drehteller 20 befestigt ist. Den Drehteller 20 erkennt man besonders gut in den Fig. 2 und 3. Erfindungsgemäß ist in diesem Zusammenhang erkannt worden, daß die Verwendung einer selbstgeführten Werkzeugeinheit 13 die Möglichkeit schafft, durch Drehung des Drehtellers 20 gegenüber dem unteren Werkzeugträger 6 bzw. der Matrizenplatte 9 z. B. bei Verwendung einer Schneideinheit als Werkzeugeinheit 13 praktisch jeden beliebigen Gehrungswinkel einfach einzustellen. Das ist natürlich sehr viel einfacher, als jeweils die Werkzeugeinheit 13 selbst auszuwechseln. Außerdem ist das kostengünstig, da nicht Werkzeugeinheiten 13 für verschiedene Gehrungswinkel vorgehalten werden müssen. Entsprechende Handhabungsvorteile ergeben sich auch für andere Arten von Werkzeugeinheiten mit nicht drehsymmetrischen Werkzeugen.

Die Drehbewegung des Drehtellers 20 kann in einer oder in beiden Drehrichtungen durch Anschläge begrenzt sein. Auch Zwischeneinstellungen durch Rastung bei besonders häufig vorkommenden Drehwinkeln, beispielsweise entsprechend häufig gewählten Gehrungswinkeln, können vorgesehen sein. Das alles ist in der Zeichnung nicht dargestellt. Dargestellt ist in den Fig. 1 und 2 allerdings, daß ein motorischer, insbesondere als Hydraulikmotor ausgeführter Drehantrieb 21 für den Drehteller 20 vorgesehen ist. Ein Hydraulikmotor als Drehantrieb 21 ist besonders deshalb zweckmäßig, weil für den Antrieb der Werkzeugmaschine sowieso an vielen Stellen Hydraulikmedium zugeführt werden muß.

Wie der Drehantrieb 21 mit dem Drehteller 20 antriebstechnisch gekuppelt werden kann, bleibt den konstruktiven Einfällen der Fachleute überlassen. Eine Möglichkeit ergibt sich beispielsweise dadurch, daß der Drehteller einen außen umlaufenden Zahnkranz und der Drehantrieb ein in den Zahnkranz eingerücktes oder einrückbares Ritzel aufweist. Ist durch Anschläge die Gesamt-Drehbewegung des Drehtellers auf einen bestimmten Winkel unter 360° begrenzt, so muß sich der Zahnkranz am Außenumfang des Drehtellers natürlich über den für die Drehung tatsächlich benötigten Winkelbereich erstrecken. Anstelle der Anbringung des Zahnkranzes am Außenumfang könnte der Zahnkranz auch am oberen Außenrand oder an anderer Stelle am Drehteller angeordnet sein.

Die Fig. 1 und 2 zeigen nun eine besonders bevorzugte Lehre der Erfindung, die dadurch gekennzeichnet ist, daß der Drehteller 20 eine nach unten durch die Matrizenplatte 9 ragende Antriebswelle 22 aufweist und der Drehantrieb 21 an der Antriebswelle 22 angreift. Der Drehantrieb 21 könnte unmittelbar an der Antriebswelle 22 angreifen, beispielsweise könnte die Antriebswelle 22 gleichzeitig die Abtriebswelle des Drehantriebs 21 sein. Im dargestellten Ausführungsbeispiel ist die Kraftübertragung hier aber anders gelöst, nämlich dadurch, daß der Drehantrieb 21 ein Abtriebszahnrad 23 und die Antriebs welle 22 ein Antriebszahnrad 24 trägt und beide Zahnräder 23, 24 über eine Kette oder einen Zahnriemen 25 miteinander verbunden sind. Anstelle von Zahnrädern kämen auch Reibräder in Verbindung mit einem Reibradantrieb in Frage.

Wegen der Drehbarkeit der Werkzeugeinheit 13 auf dem Drehteller 20 muß auch die Verbindung der Werkzeugeinheit 13, also die antriebsmäßige Kupplung der Werkzeugeinheit 13 mit dem oberen Werkzeugträger 3 eine Drehbewegung zulassen. Das kann nun dadurch realisiert werden, daß diese antriebsmäßige Kupplung drehsymmetrisch ausgeführt ist. Die drehsymmetrische Ausführung bzw. die Zulassung einer Drehbewegung ist zwanglos dann gegeben, wenn lediglich ein Druckstößel 15 vorgesehen ist, der auf der Kraftübertragungsfläche 14 aufsitzt, wie das einer bevorzugten Lehre der Erfindung entspricht. Ansonsten sind aber auch andere eine Drehbewegung zulassende Kupplungssysteme verwendbar.

Bislang ist davon ausgegangen worden, daß die Matrizenplatte 9 eine einzige durchgehende Platte ist, die einerseits normale Werkzeugaufnahmen 7 für normale Unterwerkzeuge 8, andererseits die besonders gestaltete Werkzeugaufnahme 7 für den Drehteller 20 zum Aufsetzen der Werkzeugeinheit 13 aufweist. Das in der Zeichnung dargestellte Ausführungsbeispiel einer erfindungsgemäßen Werkzeugmaschine ist nun insoweit aber anders und besonders ausgestaltet, als die Werkzeugmaschine den Drehteller 20 und den Drehantrieb 21 usw. immer trägt. Gleichwohl kann diese Werkzeugmaschine flexibel umgerüstet werden, beispielsweise also auf eine Matrizenplatte 9 mit fünf gleichartigen, normalen Werkzeugaufnahmen 7. Um diese flexible Umrüstung zu ermöglichen gilt hier, daß die Matrizenplatte 9 eine untere, den Drehteller 20 in der als Drehfassung ausgeführten Werkzeugaufnahme 8 aufnehmende Sattelplatte 26 sowie eine auf die Sattelplatte 26 aufspannbare, die übrigen Werkzeugaufnahmen 7 für Unterwerkzeuge 8 aufnehmende Oberplatte 27 aufweist. Fig. 2 zeigt, daß die Oberplatte 27, die die beiden normalen Werkzeugaufnahmen 7 für normale, als Stanzmatrizen ausgeführte Unterwerkzeuge 8 aufweist, auf der Sattelplatte 26 durch Befestigungsschrauben befestigt ist. Sie läßt den Bereich des Drehtellers 20 frei, so daß dort wie dargestellt die Werkzeugeinheit 13 angebracht werden kann und ausreichend Platz zur Ausführung der Drehbewegung vorfindet. Man kann nun aber auch die Werkzeugeinheit 13 vom Drehteller 20 abnehmen und die Oberplatte 27 durch eine die Sattelplatte 26 auf der vollen Breite überfassende Oberplatte 27 mit insgesamt fünf normalen Werkzeugaufnahmen 7 für normale, als Stanzmatrizen ausgeführte Unterwerkzeuge 8 ersetzen. Auf diese Weise läßt sich sehr einfach eine Umrüstung der erfindungsgemäßen Werkzeugmaschine realisieren.

**Ansprüche**

1. Werkzeugmaschine mit einem an drei Seiten offenen, vorzugsweise etwa C-förmigen Maschinenrahmen (1), einem am Maschinenrahmen (1) angebrachten, durch einen Antriebsschlitten (2) vertikal bewegbaren, oberen Werkzeugträger (3) mit mindestens zwei nebeneinander angeordneten Werkzeugaufnahmen (4) mit entsprechenden Oberwerkzeugen (5), einem am Maschinenrahmen (1) angebrachten unteren Werkzeugträger (6) mit einer entsprechenden Anzahl von nebeneinander angeordneten Werkzeugaufnahmen (7) mit entsprechenden Unterwerkzeugen (8) und einer auf dem unteren Werkzeugträger (6) aufgespannten, vorzugsweise in einer Fassung angeordneten, die Werkzeugaufnahmen (7) aufweisenden Matrizenplatte (9), **dadurch gekennzeichnet**, daß auf der Matrizenplatte (9) anstatt eines Unterwerkzeuges in einer entsprechenden Werkzeugaufnahme (7) eine ein Oberwerkzeug (10) und ein Unterwerkzeug (11) in einem Führungsrahmen (12) umfassende Werkzeugeinheit (13), insbesondere Schneideinheit oder Ausklinkeinheit, angeordnet und mit dem oberen Werkzeugträger (3) antriebsmäßig gekuppelt ist.

2. Werkzeugmaschine nach Anspruch 1, dadurch gekennzeichnet, daß die Werkzeugeinheit (13) den Platz mehrerer normaler Unterwerkzeuge, insbesondere dreier Unterwerkzeuge, einnimmt.

3. Werkzeugmaschine nach Anspruch 1 oder 2, dadurch gekennzeichnet, daß die Werkzeugeinheit (13) außermittig auf der Matrizenplatte (9) angeordnet ist.

4. Werkzeugmaschine nach einem der Ansprüche 1 bis 3, dadurch gekennzeichnet, daß die Werkzeugeinheit ein mit dem Oberwerkzeug verbundenes Kupplungsteil aufweist und das Kupplungsteil anstelle eines Oberwerkzeugs in eine entsprechende Werkzeugaufnahme im oberen Werkzeugträger eingesetzt ist.

5. Werkzeugmaschine nach einem der Ansprüche 1 bis 3, dadurch gekennzeichnet, daß das Oberwerkzeug (10) der Werkzeugeinheit (13) eine zum oberen Werkzeugträger (3) hin weisende Kraftübertragungsfläche (14) aufweist und daß in der entsprechenden Werkzeugaufnahme (4) im oberen Werkzeugträger (3) ein auf der Kraftübertragungsfläche (14) aufsitzender Druckstößel (15) angeordnet ist.

6. Werkzeugmaschine nach einem der vorhergehenden Ansprüche, insbesondere nach Anspruch 5, dadurch gekennzeichnet, daß das Oberwerkzeug (10) in die vom Unterwerkzeug (11) abgehobene, geöffnete Stellung vorgespannt und entgegen der Vorspannkraft in die auf das Unterwerkzeug (11) abgesenkte, geschlossene Stellung herunterdrückbar ist.

7. Werkzeugmaschine nach Anspruch 6, dadurch gekennzeichnet, daß die Vorspannung des Oberwerkzeugs (10) durch Federn (16), insbesondere durch Tellerfederstapel, erzeugt ist.

8. Werkzeugmaschine nach einem der vorhergehenden Ansprüche, insbesondere nach Anspruch 7, dadurch gekennzeichnet, daß der Führungsrahmen (12) der Werkzeugeinheit (13) als Säulenführung ausgeführt und, vorzugsweise, die Federn (16), insbesondere Tellerfedern, in entsprechenden Führungssäulen (17) angeordnet sind.

9. Werkzeugmaschine nach einem der Ansprüche 1 bis 8, dadurch gekennzeichnet, daß die Werkzeugaufnahme (7) für die Werkzeugeinheit (13) drehsymmetrisch, insbesondere als Drehfassung, ausgebildet ist und die Werkzeugeinheit (13) auf einem in der Werkzeugaufnahme (7) in horizontaler Ebene drehbaren Drehteller (20) befestigt ist.

10. Werkzeugmaschine nach Anspruch 9, dadurch gekennzeichnet, daß die Drehbewegung des Drehtellers (20) in beiden Drehrichtungen durch Anschläge begrenzt ist.

11. Werkzeugmaschine nach Anspruch 9 oder 10, dadurch gekennzeichnet, daß ein motorischer, insbesondere als Hydraulikmotor ausgeführter Drehantrieb (21) für den Drehteller (20) vorgesehen ist.

12. Werkzeugmaschine nach Anspruch 11, dadurch gekennzeichnet, daß der Drehteller einen außen umlaufenden Zahnkranz und der Drehantrieb ein in den Zahnkranz eingerücktes oder einrückbares Ritzel aufweist.

13. Werkzeugmaschine nach Anspruch 11, dadurch gekennzeichnet, daß der Drehteller (20) eine nach unten durch die Matrizenplatte (9) ragende Antriebswelle (22) aufweist und der Drehantrieb (21) an der Antriebswelle (22) angreift.

14. Werkzeugmaschine nach Anspruch 13, dadurch gekennzeichnet, daß der Drehantrieb (21) ein Abtriebszahnrad (23) und die Antriebswelle (22) ein Antriebszahnrad (24) trägt und beide Zahnräder (23, 24) über eine Kette oder einen Zahnriemen (25) miteinander verbunden sind.

15. Werkzeugmaschine nach einem der Ansprüche 9 bis 14, dadurch gekennzeichnet, daß die antriebsmäßige Kupplung der Werkzeugeinheit (13) mit dem oberen Werkzeugträger (3) drehsymmetrisch ausgeführt ist.

16. Werkzeugmaschine nach einem der Ansprüche 9 bis 15, dadurch gekennzeichnet, daß die Matrizenplatte (9) eine untere, den Drehteller (20) in der als Drehfassung ausgeführten Werkzeugaufnahme (7) aufnehmende Sattelplatte (26) sowie eine auf die Sattelplatte (26) aufspannbare, die übrigen Werkzeugaufnahmen (7) für Unterwerkzeuge (8) aufnehmende Oberplatte (27) aufweist.

Fig.1

**Fig. 2**

Fig. 3

EP 0 367 920 A2